# EUROPÄISCHE PATENTSCHRIFT

(11) **EP 4 258 619 B1**
(45) Veröffentlichungstag und Bekanntmachung des Hinweises auf die Patenterteilung: **19.08.2026**
(21) Anmeldenummer: 23193749.1
(22) Anmeldetag: 17.05.2018
(51) Int. Cl.: H04L 12/42, H04L 12/40, H04L 49/102, H04L 49/25

(54) **VERARBEITUNG VON PROZESSDATEN**
PROCESSING PROCESS DATA
TRAITEMENT DE DONNÉES DE PROCESSUS

(30) Priorität: 24.05.2017 DE 102017208835
(43) Veröffentlichungstag der Anmeldung: 11.10.2023
(62) Dokumentnummer(n) der früheren Anmeldung(en) nach Art. 76 EPÜ: 21207503.0 / 3 972 205; 18726120.1 / 3 632 053
(73) Patentinhaber: Wago Verwaltungsgesellschaft mbH, 32423 Minden (DE)
(72) Erfinder: JEROLM, Daniel, 49152 Bad Essen (DE); QUAKERNACK, Frank, 33615 Bielefeld (DE); KIRSTE, Hans-Herbert, 32429 Minden (DE)
(74) Vertreter: Bardehle Pagenberg Partnerschaft mbB Patentanwälte Rechtsanwälte

(56) Entgegenhaltungen:
- US-A1- 2013 173 868
- US-A1- 2013 177 026
- ANONYMOUS: "EtherCAT - Wikipedia", 6 May 2017 (2017-05-06), XP055490282, Retrieved from the Internet <URL:https://en.wikipedia.org/w/index.php?title=EtherCAT&oldid=778925492> [retrieved on 20180704]

## Beschreibung

### 1. Gebiet der Erfindung

Die Erfindung betrifft im Allgemeinen die Verarbeitung von Daten und im Speziellen die Verarbeitung von Lokalbusdaten an einem Datenbusteilnehmer eines Lokalbusses.

### 2. Stand der Technik

Datenbusteilnehmer werden zumeist in Automatisierungsanlagen verwendet.

Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Derartige Teilnehmer eines Bussystems werden auch als Busteilnehmer bezeichnet. Weil auf dem Bussystem Daten ausgetauscht werden, werden die Busteilnehmer auch häufig als Datenbusteilnehmer bezeichnet. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt (*engl.* Header) oder angehängt (*engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Daten vorangestellt oder angefügt werden können.

Ein Ringbus ist dabei eine spezialisierte Form eines Lokalbusses, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Die auf dem Lokalbus übertragenen Daten können auch als Lokalbusdaten bezeichnet werden. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

In einem Ringbus wird das Datenpaket von einem zum anderen Datenbusteilnehmer weitergegeben. Dabei empfängt zu jeder gegebenen Zeit ein Datenbusteilnehmer von seinem vorgelagerten Datenbusteilnehmer immer nur einen Teil des Datenpakets. Wenn die in diesem Teil enthaltenen Daten vom Datenbusteilnehmer verarbeitet worden sind, wird der Teil an den nachgelagerten Datenbusteilnehmer weitergeleitet und gleichzeitig wird von dem vorgelagerten Datenbusteilnehmer ein neuer Teil des Datenpakets empfangen. Auf diese Weise passieren alle Teile des Datenpakets sequentiell alle Datenbusteilnehmer.

Dabei hat jeder Datenbusteilnehmer eine unterschiedliche Verarbeitungszeit, also eine unterschiedliche Zeit zwischen dem Erfassen der Prozessdaten und dem Vorliegen eines Verarbeitungsergebnisses. Im oben genannten Stand der Technik wird dieser unterschiedlichen Verarbeitungszeit dadurch Rechnung getragen, dass jeder Datenbusteilnehmer adaptive Laufzeitverzögerungen aufweist. D.h. die Prozessdaten werden so lange im Datenbusteilnehmer zwischengespeichert, bis dieser seine Verarbeitung abgeschlossen hat, bevor die Prozessdaten an den nächsten Datenbusteilnehmer weitergeleitet werden.

Weiterer Stand der Technik ist in der US 2013/177026 A1 und der US 2013/173868 A1 offenbart.

Aufgabe der vorliegenden Erfindung ist es, einen Datenbusteilnehmer und ein entsprechendes Verfahren bereitzustellen, dass eine Verarbeitung der Prozessdaten verbessert.

### 3. Zusammenfassung der Erfindung

Diese Aufgabe wird mit einem Datenbusteilnehmer und einem Verfahren entsprechend der unabhängigen Ansprüche gelöst. Vorteilhafte Ausführungsformen sind in den Unteransprüchen beschrieben.

Ein Datenbusteilnehmer dient zum Steuern oder Überwachen eines Prozesses, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Prozessdaten für den Lokalbus um oder umgekehrt. Die Datenbusteilnehmer können auch als Lokalbusteilnehmer bezeichnet werden.

Der erfindungsgemäße Datenbusteilnehmer zum Verarbeiten von Daten ist mit einem Lokalbus verbindbar - also angepasst mit dem Lokalbus verbunden zu werden -, insbesondere einem Ringbus. In einem Lokalbus mit Datenbusteilnehmern werden Daten in Form von Datenpaketen übertragen. Die Datenpakete können auch als Telegramme bezeichnet werden. Ein Datenpaket weist beispielsweise Header, Payload und vorteilhafterweise eine Prüfsumme auf. Ein Datenpaket ist vorteilhafterweise ein Kommunikationsdatenpaket oder ein Prozessdatenpaket.

Ein Kommunikationsdatenpaket enthält keine Prozessdaten. Vorteilhafterweise enthält ein Kommunikationsdatenpaket Daten insbesondere zum Programmieren und/oder zum Steuern und/oder zum Überwachen und/oder zum Identifizieren zumindest eines Datenbusteilnehmers. Vorteilhafterweise weist das Kommunikationsdatenpaket eine Adresse auf, die mindestens einem Datenbusteilnehmer zugeordnet ist. Vorzugsweise ist der Datenbusteilnehmer eingerichtet, die Adresse auszuwerten.

Ein Prozessdatenpaket weist Prozessdaten auf, die von den Datenbusteilnehmern des Lokalbusses gesendet und/oder empfangen werden. Vorteilhafterweise weist das Prozessdatenpaket keine Adresse zur Übertragung der Prozessdaten an einen oder von einem Datenbusteilnehmer im Lokalbus auf. In dem Prozessdatenpaket sind die Prozessdaten beispielsweise derart angeordnet, dass Datenbusteilnehmer auf Grund der jeweiligen Position der Prozessdaten in dem Prozessdatenpaket, beispielsweise ein oder mehrere Bits innerhalb eines zugeordneten zusammenhängenden Datenblocks (1 Byte), diejenigen dem jeweiligen Datenbusteilnehmer zugehörigen Prozessdaten erkennen können. Vorteilhafterweise weist das Prozessdatenpaket eine Kennung (IDE) auf, die dem Typ des Datenpakets, also dem Prozessdatenpaket zugeordnet und durch den Datenbusteilnehmer identifizierbar ist. Die Prozessdaten können auch als Lokalbusdaten bezeichnet werden.

Der erfindungsgemäße Datenbusteilnehmer weist eine Eingangsschnittstelle zum Empfangen von ersten Lokalbusdaten sowie eine Ausgangsschnittstelle zum Senden von zweiten Lokalbusdaten auf. Die Eingangsschnittstelle kann dabei beispielsweise mit dem Lokalbus verbindbar sein - also angepasst sein mit dem Lokalbus verbunden zu werden - und über die Eingangsschnittstelle kann der Datenbusteilnehmer beispielsweise erste Lokalbusdaten von einem vorgelagerten Datenbusteilnehmer empfangen. Die Ausgangsschnittstelle kann dabei beispielsweise mit dem Lokalbus verbindbar sein - also angepasst sein mit dem Lokalbus verbunden zu werden - und über die Ausgangsschnittstelle kann der Datenbusteilnehmer zweite Lokalbusdaten an einen nachgelagerten Datenbusteilnehmer senden. Die Datenbusteilnehmer selbst bilden in diesem Fall den Lokalbus aus, wobei noch weitere Elemente, z.B. ein Abschlussstück vorgesehen sein können. Der vorgelagerte Datenbusteilnehmer kann ein Datenbusteilnehmer sein, der dem empfangenen Datenbusteilnehmer physikalisch unmittelbar oder mittelbar im Lokalbus vorausgeht beziehungsweise der Lokalbusmaster sein, der beispielsweise den ersten Datenbusteilnehmer im Lokalbus darstellt. Der nachgelagerte Datenbusteilnehmer kann ein Datenbusteilnehmer sein, der dem sendenden Datenbusteilnehmer physikalisch unmittelbar oder mittelbar im Lokalbus folgt. Das Empfangen und Senden der ersten und zweiten Lokalbusdaten kann dabei mit einem bestimmten, vorzugsweise konstanten Bustakt geschehen. Dieser Bustakt gibt dementsprechend an mit welchem Takt die Kommunikation zwischen den Datenbusteilnehmern betrieben wird. Beispielsweise wird pro Takt ein Teil der Lokalbusdaten empfangen und gesendet. Der Teil der Lokalbusdaten kann beispielsweise bitweise empfangen oder gesendet werden und mit jedem Takt kann eine bestimmte Anzahl an Bits empfangen und gesendet werden. Beispielsweise kann pro Takt ein Bit oder 8 Bit also 1 Byte empfangen und gesendet werden. Zwischen dem Empfangen und Senden können aber auch mehrere Takte liegen und das Senden und Empfangen geschieht immer in einer ganzzahligen Anzahl von Takten. Insbesondere muss der Datenbusteilnehmer Zeit haben, zwischen dem Empfang der ersten Lokalbusdaten und dem Senden der zweiten Lokalbusdaten die ersten Lokalbusdaten zu verarbeiten, um die zweiten Lokalbusdaten zu erzeugen.

Zur Verarbeitung von Daten, insbesondere der ersten Lokalbusdaten, kann der erfindungsgemäße Datenbusteilnehmer eine Verarbeitungskomponente aufweisen, die angepasst ist zum taktgesteuerten Verarbeiten von den ersten Lokalbusdaten und/oder von in einem Speicher gespeicherten Daten und zur Ausgabe zumindest eines Steuersignals, welches eine Logikeinheit steuert. Die gespeicherten Daten können dabei in einem Speicher gespeichert sein, wobei der Speicher Mittel zum Vorhalten von Daten sein kann. Dabei kann das Mittel zum Speichern Teil des Datenbusteilnehmers sein, alternativ kann es aber auch extern vom Datenbusteilnehmer sein, oder ein Zusatzmodul zum Datenbusteilnehmer sein. Der Datenbusteilnehmer muss nur Zugriff auf das Mittel zum Speichern haben.

Die Logikeinheit ist angepasst zum Ändern zumindest eines Teils beziehungsweise einer bestimmten Menge der ersten Lokalbusdaten basierend auf dem Steuersignal der Verarbeitungskomponente zur Erzeugung der zweiten Lokalbusdaten. Das Ändern kann dabei ein bitweises ändern der gerade am Datenbusteilnehmer vorliegenden ersten Lokalbusdaten beinhalten. Das Ändern hervorgerufen durch das Steuersignal kann auch darin bestehen, dass keine ersten Lokalbusdaten verändert werden. D.h. die ersten Lokalbusdaten durchlaufen in diesem Fall unverändert den Datenbusteilnehmer, weil die ersten Lokalbusdaten beispielsweise nicht an den Datenbusteilnehmer gerichtet sind, also nicht dazu ausgelegt sind eine Steuerung oder Regelung an dem Datenbusteilnehmer hervorzurufen, sondern gerichtet sind an einen anderen Datenbusteilnehmer. In diesem Fall kann die Verarbeitungskomponente also ein Steuersignal erzeugen, welches die Logikeinheit anweist, keine Änderung an den ersten Lokalbusdaten vorzunehmen. In diesem Fall entsprechen die ersten Lokalbusdaten den zweiten Lokalbusdaten. Im Falle dessen, dass eine Änderung stattfindet steuert das Steuersignal der Verarbeitungskomponente die Logikeinheit an eine Änderung der ersten Lokalbusdaten oder zumindest eines Teils beziehungsweise eine Menge der ersten Lokalbusdaten vorzunehmen, so dass sich die ersten Lokalbusdaten von den zweiten Lokalbusdaten unterscheiden. Der Teil der Logikeinheit, der für die Änderung der Daten angepasst ist, ist dabei vorzugsweise nicht taktgesteuert.

Die an der Ausgangsschnittstelle anliegenden zweiten Lokalbusdaten sind in einer Ausbildung der Erfindung gegenüber der Ausgabe der von der Eingangsschnittstelle an die Logikeinheit ausgegeben ersten Lokalbusdaten- abgesehen von der inhärenten Verzögerung der Komponenten der Logikeinheit - unverzögert. In einem Anfangszeitraum, wenn die Verarbeitungskomponente ein Steuersignal erzeugt, welches die Komponenten der Logikeinheit ansteuert Änderungen vorzunehmen, können die Änderungen zunächst instabil sein. Damit aber in jedem Fall ein deterministisches Laufzeitverhalten des Datenbusteilnehmers und eine stabile Änderung durch das Steuersignal sichergestellt werden können und dabei ein vorzeitiges Senden der zweiten Lokalbusdaten durch die Ausgangsschnittstelle verhindert wird, ist die Logikeinheit angepasst zum taktgesteuerten Verzögern des Sendens der zweiten Lokalbusdaten durch die Ausgangsschnittstelle. Dabei stellt ein durch die taktgesteuerte Verzögerung bewirkter Zeitabstand sicher, dass die Instabilität der Änderungen aufgehört hat.

Die taktgesteuerte Verzögerung ist vorteilhafterweise eine konstante Verzögerung. D.h. jeder Datenbusteilnehmer beziehungsweise dessen Logikeinheit verzögert das Senden der zweiten Lokalbusdaten um eine konstante Zeit oder eine bestimmte Anzahl von Arbeitstakten der Verarbeitungskomponente beziehungsweise um eine konstante Anzahl von Bustakten des Lokalbusses. Hierzu kann die Logikeinheit beispielsweise eine der Anzahl der verzögerten Arbeitstakte / Bustakte entsprechende Anzahl von Verzögerungsgliedern aufweisen. D.h. für jeden Arbeitstakt oder für jede konstante Zeit, die das Senden der zweiten Lokalbusdaten verzögert werden soll, gibt es vorteilhafterweise genau ein Verzögerungsglied. Alternativ kann auch ein Zähler verwendet werden. Beispielsweise kann von der Eingangsschnittstelle ein Signal an die Logikeinheit ausgegeben werden, welches beispielsweise die Gültigkeit der ersten Lokalbusdaten bestätigt. Dieses Signal ist von der Anzahl von Verzögerungsgliedern um eine bestimmte konstante Zeit oder eine bestimmte konstante Anzahl von Arbeitstakten / Bustakten verzögert, bevor es von der Logikeinheit an die Ausgangsschnittstelle weitergegeben wird. Die Ausgangsschnittstelle ist vorteilhafterweise dazu angepasst, erst bei Erhalt dieses Signals, welches die Gültigkeit der ersten Lokalbusdaten anzeigt, die zweiten Lokalbusdaten an den nachgelagerten Datenbusteilnehmer weiterzuleiten. Dabei hängt die Gültigkeit der ersten Lokalbusdaten ab von einer Hardware-Überprüfung, beispielsweise einem Hardware-Zähler. D.h. es findet eine Verzögerung eines Gültigkeitssignals statt nicht aber der Daten. Dies hat den Vorteil, dass die Verzögerungsglieder sehr einfach ausgestaltet werden können, weil diese nicht die Daten vorhalten müssen, sondern nur ein Gültigkeitssignal, welches ein einzelnes Bit sein kann. Die Verzögerungsglieder können dementsprechend durch einfache Komponenten gebildet werden. Die Anzahl der Verzögerungsglieder kann dabei der Anzahl der zu verzögernden Arbeitstakte / Bustakte entsprechen. Die Anzahl der Verzögerungsglieder wird gewählt basierend auf der von der Verarbeitungskomponente benötigten Zeit, um eine Verarbeitung durchzuführen und ein entsprechendes Steuersignal an die Logikeinheit auszugeben. Die Ausgangsschnittstelle ist also angepasst, ein Senden der zweiten Lokalbusdaten erst bei Erhalt des Gültigkeitssignals durchzuführen. Mit anderen Worten, die Ausgangsschnittstelle wartet so lange mit dem Senden der zweiten Lokalbusdaten, bis ein verzögertes Gültigkeitssignal empfangen wird.

Mit dem erfindungsgemäßen Datenbusteilnehmer wird ein deterministisches Laufzeitverhalten der Datenbusteilnehmer beziehungsweise des gesamten Lokalbusses erreicht. D.h. die Zeit die die Prozessdaten im Lokalbus verarbeitet werden ist dem Lokalbusmaster und der Steuerung bekannt und hängt nur von der Anzahl der am Lokalbus beteiligten Datenbusteilnehmer ab. Dies hat den Vorteil, dass bereits bei der Installation des Lokalbusses vorhergesagt werden kann, welche Laufzeit dieser hat. D.h. die Laufzeit stellt ein Vielfaches der Verarbeitungszeit eines Datenbusteilnehmers dar. Bei nicht deterministischen Systemen stellt die Laufzeit die Summe der unterschiedlichen Verarbeitungszeiten der unterschiedlichen Datenbusteilnehmer dar.

In einer bevorzugten Ausführungsform des erfindungsgemäßen Datenbusteilnehmers ist die Logikeinheit zwischen der Eingangsschnittstelle und der Ausgangsschnittstelle angeordnet. Die Logikeinheit stellt dabei die Verbindung zwischen der Eingangsschnittstelle und der Ausgangsschnittstelle her. Vorzugsweise ist die Logikeinheit an die Eingangsschnittstelle und an die Ausgangsschnittstelle angeschlossen. So kann sichergestellt werden, dass keine weiteren Einheiten eine nicht-deterministische Verzögerung der Verarbeitung bewirken.

In einer weiteren bevorzugten Ausführungsform des erfindungsgemäßen Datenbusteilnehmers basiert der Arbeitstakt der Verarbeitungskomponente auf der Taktfrequenz eines Bustaktes des Lokalbusses. Beispielsweise kann der Arbeitstakt ein Vielfaches des Bustaktes sein oder dem Bustakt sogar entsprechen. Der Arbeitstakt der Verarbeitungskomponente gibt dabei an, mit welchem Arbeitstakt die Verarbeitungskomponente arbeitet und Daten verarbeiten kann. Der Bustakt gibt an in welchem Takt die Ausgangsschnittstellen zweite Lokalbusdaten senden. Dieser Takt kann von dem Lokalbusmaster vorgegeben werden, der Daten an den nachgelagerten Datenbusteilnehmer des Lokalbusses sendet. Es ist auch denkbar, dass ein Datenbusteilnehmer eine gewisse Anzahl von Verzögerungsgliedern aufweist und der Datenbusteilnehmer vor oder beim Einsetzen in den Lokalbus derart konfiguriert wird, dass dieser nur eine bestimmte Anzahl dieser Verzögerungsglieder verwendet. Diese bestimmte Anzahl kann derart angepasst sein, dass alle Datenbusteilnehmer im Lokalbus die gleiche Anzahl von Verzögerungsgliedern verwenden.

In einer weiteren bevorzugten Ausführungsform des erfindungsgemäßen Datenbusteilnehmers weist die Logikeinheit mindestens ein Verzögerungsglied auf, welches einen Takteingang zur zeitlichen Verzögerung seines gespeicherten Wertes aufweist. Das Verzögerungsglied kann dabei beispielsweise ein bistabiles Kippglied sein, welches zwei stabile Zustände einnehmen kann. Mit Hilfe des Takteingangs kann das bistabile Kippglied dazu eingerichtet sein, nur zu bestimmten Zeiten die Steuereingänge freizugeben, d.h. nur zu bestimmten Zeiten eine Änderung des gespeicherten oder verzögerten Gültigkeitssignals zuzulassen. Das Berücksichtigen eines Taktsignals ermöglicht auch Synchronität des bistabilen Kippgliedes mit der Verarbeitungskomponente.

Erfindungsgemäß weist die Logikeinheit nicht-getaktete Logikelemente beziehungsweise Logikbausteine auf. Vorteilhaft haben die Logikelemente eine sehr kurze Signallaufzeit. Die Änderung der ersten Lokalbusdaten durch die Logikeinheit basiert auf dem Steuersignal der Verarbeitungskomponente. Dieses liegt nicht ohne Verzögerung vor, weil die Verarbeitungskomponente eine gewisse Zeit benötigt, um z.B. die ersten Lokalbusdaten zu verarbeiten. Verarbeiten in diesem Fall bedeutet, dass die Verarbeitungskomponente für die jeweiligen gerade vorliegenden ersten Lokalbusdaten einen bestimmten Satz von Instruktionen abarbeiten muss. Dieser Satz von Instruktionen kann in dem Datenbusteilnehmer in Form einer Liste gespeichert sein. Anhand der Instruktionen ist die Verarbeitungskomponente in der Lage ein Steuersignal zu erzeugen, welches die Logikeinheit anweist eine entsprechende Änderung der ersten Lokalbusdaten vorzunehmen. Die Verarbeitungskomponente kann dabei auf einen Instruktionssatz zurückgreifen, der beispielsweise die Instruktionen "SKIP", "MOVE", "NEGATION", "INCREMENT", "AND" und "OR" oder einer Kombination daraus enthält, wobei die auszuführenden Instruktionen durch Instruktionslisten gespeichert im Datenbusteilnehmer oder in einem Speicher auf den der Datenbusteilnehmer Zugriff hat. Das Verarbeiten beziehungsweise Abarbeiten der Instruktionen und das Erzeugen des Steuersignals ist allerdings getaktet und nimmt eine bestimmte Zeit in Anspruch. Es kann also davon gesprochen werden, dass die Logikelemente der Logikeinheit zur Änderung der ersten Lokalbusdaten nicht-getaktet sind, deren Verhalten aber durch ein taktabhängiges Steuersignal steuerbar ist. Dabei kann das Steuersignal bewirken, dass entweder eine oder keine Änderung der ersten Lokalbusdaten stattfindet. D.h. wenn das Steuersignal eine Änderung ansteuert, unterscheiden sich die ersten Lokalbusdaten am Eingang der Logikeinheit zumindest teilweise von den zweiten Lokalbusdaten am Ausgang der Logikeinheit. Wenn das Steuersignal steuert, dass keine Änderung durchgeführt werden soll, so entsprechen die ersten Lokalbusdaten am Eingang der Logikeinheit den zweiten Lokalbusdaten am Ausgang der Logikeinheit.

In einer weiteren bevorzugten Ausführungsform des erfindungsgemäßen Datenbusteilnehmers ist die Eingangsschnittstelle angepasst zur Seriell-Parallel-Wandlung und / oder zur Dekodierung der ersten Lokalbusdaten und die Ausgangsschnittstelle ist angepasst zur Parallel-Seriell-Wandlung und / oder zur Kodierung der zweiten Lokalbusdaten. D.h. die Daten auf dem Lokalbus werden in serieller Form übertragen und eventuell kodiert übertragen. Die Eingangsschnittstelle wandelt die seriellen Daten aber in parallele Datenströme um und dekodiert diese gegebenenfalls für die Verarbeitung durch die Verarbeitungskomponente beziehungsweise für Änderungen durch die Logikeinheit, bevor zweite Lokalbusdaten anschließend von der Ausgangsschnittstelle wieder seriell gewandelt werden und eventuell kodiert werden, bevor diese an den nachgelagerten Datenbusteilnehmer gesendet werden. Dabei kann die Eingangsschnittstelle beispielsweise angepasst sein zur parallelen Ausgabe der ersten Lokalbusdaten in Form eines Symbols mit einer festen Bitanzahl, beispielsweise 8 Bits also 1 Byte. Durch die Seriell-Parallel-Wandlung liegt an der Logikeinheit eine konstante Anzahl von Datenbits an, diese können nahezu ohne Verzögerung - abgesehen von der inhärenten Verzögerung der Komponenten der Logikeinheit - an dem Ausgang der Logikeinheit geändert oder ungeändert bereitgestellt werden.

In einer weiteren bevorzugten Ausführungsform des erfindungsgemäßen Datenbusteilnehmers weist die Logikeinheit auch eine Bypassverbindung zwischen Eingangsschnittstelle und Ausgangsschnittstelle auf zum Weiterleiten von ersten Lokalbusdaten als zweite Lokalbusdaten. Diese Lokalbusdaten können beispielsweise Steuerdaten enthalten, die von der Logikeinheit nicht verändert werden können beziehungsweise sollen. Diese Lokalbusdaten über die Bypassverbindung enthalten vorzugsweise keine Prozessdaten.

Die oben genannte Aufgabe wird auch gelöst durch ein Verfahren zur Verarbeitung von Daten in einem Datenbusteilnehmer verbindbar mit einem Lokalbus, insbesondere einem Ringbus. D.h. der Datenbusteilnehmer ist angepasst mit dem Lokalbus verbunden zu werden. Das Verfahren weist auf Empfangen von ersten Lokalbusdaten an einer mit dem Lokalbus verbindbaren Eingangsschnittstelle - also einer Eingangsschnittstelle die angepasst ist, um mit dem Lokalbus verbunden zu werden -, taktgesteuertes Verarbeiten von den ersten Lokalbusdaten und/oder von in einem Speicher gespeicherten Daten durch eine Verarbeitungskomponente, Ausgabe eines Steuersignals durch die Verarbeitungskomponente, Ändern zumindest eines Teils beziehungsweise einer Menge der ersten Lokalbusdaten basierend auf dem Steuersignal zur Erzeugung von zu sendenden zweiten Lokalbusdaten durch eine Logikeinheit, taktgesteuertes Verzögern des Sendens der zweiten Lokalbusdaten durch eine mit dem Lokalbus verbindbaren Ausgangsschnittstelle - also einer Ausgangsschnittstelle die angepasst ist, um mit dem Lokalbus verbunden zu werden - bedingt durch die Logikeinheit und Senden der zweiten Lokalbusdaten durch die Ausgangsschnittstelle nach der Verzögerung. Das Ändern der ersten Lokalbusdaten durch die Logikeinheit kann dabei beispielsweise bitgranular geschehen. Die Verarbeitungskomponente kann dabei auf einen Instruktionssatz zurückgreifen, der beispielsweise die Instruktionen "SKIP", "MOVE", "NEGATION", "AND", "OR" und "INKREMENT" oder einer Kombination daraus enthält, wobei die auszuführenden Instruktionen durch Instruktionslisten gespeichert im Datenbusteilnehmer oder in einem Speicher auf den der Datenbusteilnehmer Zugriff hat.

### 4. Kurze Beschreibung der Zeichnungen

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung und einem beispielhaften Ringbus;
- Fig. 2: eine schematische Darstellung eines von einem Lokalbusmaster gesendeten Datenpakets mit Lokalbusdaten;
- Fig. 3: eine schematische Darstellung einer beispielhaften Ausführungsform eines Datenbusteilnehmers mit Verarbeitungseinheit zum Verarbeiten des in Figur 2 gezeigten Datenpakets; und
- Fig. 4: ein schematisches Blockdiagramm einer beispielhaften Ausführungsform einer Logikeinheit des in Figur 3 gezeigten Datenbusteilnehmers.

### 5. Beschreibung bevorzugter Ausführungsbeispiele

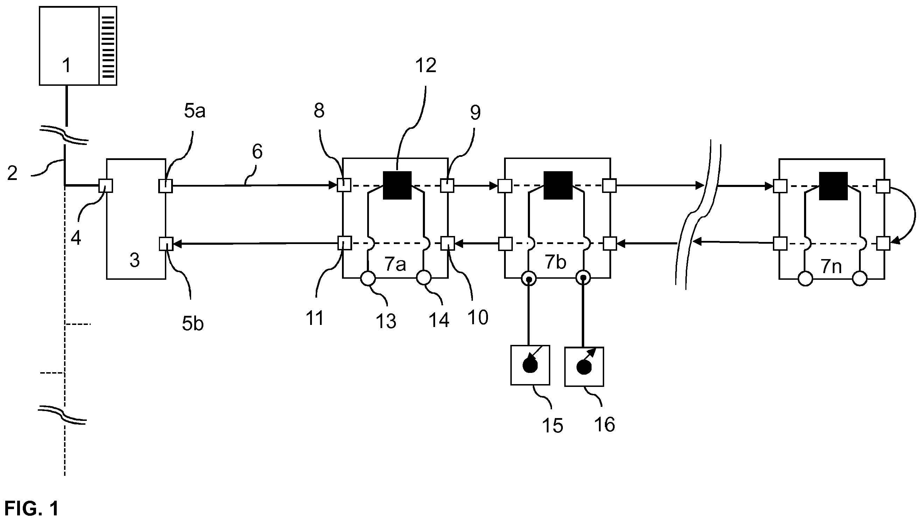

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerks über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. An den Lokalbus sind Datenbusteilnehmer 7a, 7b, ..., 7n angeschlossen bzw. bilden diesen. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel die Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Die Daten auf dem Lokalbus 6 können auch als Lokalbusdaten bezeichnet werden. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 - der auch einen Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder optische Verbindung herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b, ..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können.

Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

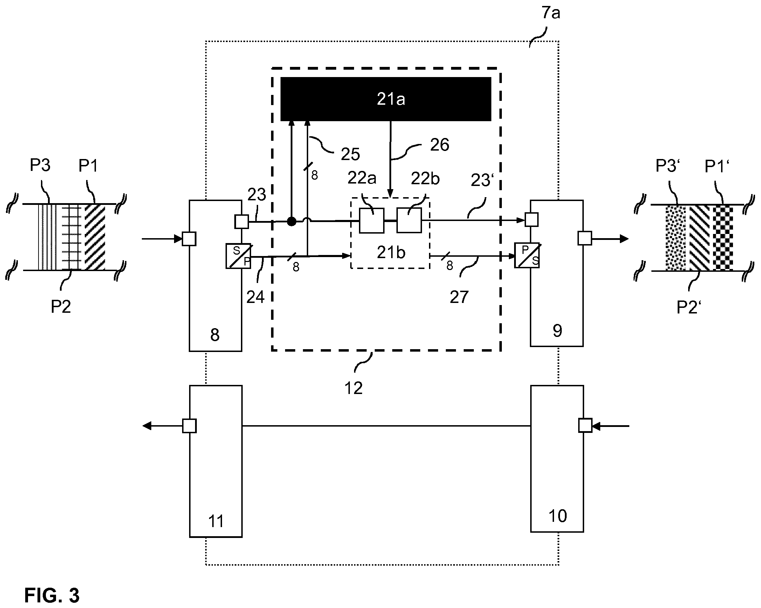

Des Weiteren weisen die Datenbusteilnehmer 7a, 7b, ..., 7n in dem in Figur 1 gezeigten Ausführungsbeispiel auch eine Verarbeitungseinheit 12 auf, die beispielsweise aus einer Verarbeitungskomponente und einer Logikeinheit besteht, die in Figur 3 näher gezeigt sind. Die Verarbeitungseinheit 12 kann auch als Gesamtschaltung des Datenbusteilnehmers bezeichnet werden. D.h. die Verarbeitungseinheit 12 empfängt Daten über die Eingänge 8 und 10 und gibt Daten auf den Ausgängen 9 und 11 aus. Des Weiteren kann die Verarbeitungseinheit 12 Daten von den Ein-/und Ausgängen 13 und **14** empfangen beziehungsweise ausgeben. Weiterhin hat die Verarbeitungseinheit 12 Zugriff auf einen Speicher - hier nicht gezeigt - des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden.

Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sein und die Datenbusteilnehmer 7a, 7b, ..., 7n auf diese Moduleinheit aufgesteckt werden können. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, die Kommunikation zwischen den restlichen Datenbusteilnehmern 7a, 7b, ..., 7n nicht unterbrochen wird, weil die Kommunikation über die noch vorhandenen Moduleinheiten geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Der in dem hier gezeigten Ausführungsbeispiel gezeigte Ringbus 6 basiert auf einer Zyklusrahmenkommunikation. Ein Zyklusrahmen kann dabei beispielsweise als ein wiederkehrendes (zyklisches) vorzugsweise äquidistantes Zeitintervall, in dem Daten auf dem Ringbus 6 übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Daten vorgesehen, die innerhalb des Zyklusrahmens in Form von Datenpaketen übertragen werden können. Die Startkennung (SOC) und die Datenpakete werden über den Ringbus 6 übertragen und durchlaufen alle Datenbusteilnehmer 7a, 7b, ..., 7n. Vorteilhafterweise wird der Zyklusrahmen durch den Lokalbusmaster 3 im Ringbus 6 initiiert. Die Startkennung (SOC) ist separat, also als eigenständiges Symbol übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Ringbus 6. Das Signal ermöglicht es den Datenbusteilnehmern 7a, 7b, ..., 7n, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

.Jedes Datenpaket wird von dem Lokalbusmaster 3 in Abwärtsrichtung an den ersten Datenbusteilnehmer 7a des Ringbusses 6 gesendet. Dieser empfängt einen ersten Teil des Datenpakets über die Schnittstelle 8. Ein derartiger Teil des Datenpakets wird im Folgenden auch als Stück oder Einheit bezeichnet. Der Datenbusteilnehmer 7a führt dann eine Verarbeitung des Teils aus, und leitet den Teil dann an den nächsten Datenbusteilnehmer 7b über Schnittstelle 9 weiter, vorzugsweise gleichzeitig empfängt der erste Datenbusteilnehmer 7a einen zweiten Teil des Datenpakets usw. Die Größe der Teile des Datenpakets, also die Stückelung des Datenpakets, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Datenpakets am Datenbusteilnehmer 7a, 7b, ..., 7n vorliegen.

Das Datenpaket durchläuft dementsprechend einheitenweise, stückchenweise, oder Teile weise, zum Beispiel in Teilen oder Symbolen von 8 Bits, die Datenbusteilnehmer 7a, 7b, ..., 7n. Der Teil des Datenpakets, welcher vom letzten Datenbusteilnehmer, in dem hier gezeigten Ausführungsbeispiel Datenbusteilnehmer 7n, verarbeitet worden ist, durchläuft dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 10 verbindet oder an den letzten Datenbusteilnehmer 7n wird eine schaltbare Brücke - hier nicht gezeigt - angeschlossen, die die Funktion übernimmt die Teile des Datenpakets von der Schnittstelle 9 auf die Schnittstelle 10 zu leiten. Alternativ kann die Schnittstelle 10 des Datenbusteilnehmers 7n auch mit Hilfe einer Bypassleitung - hier nicht gezeigt - direkt mit der Schnittstelle 5b des Lokalbusmasters 3 verbunden werden.

In der Aufwärtsrichtung können die Einheiten des Datenpakets beziehungsweise der Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Einheiten des Datenpakets stattfindet, so dass das Datenpaket zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Bei der Verarbeitung der Datenpakete in Abwärtsrichtung, d.h. von dem Lokalbusmaster 3 weg, oder in Aufwärtsrichtung, d.h. zum Lokalbusmaster 3 hin, wird die Verarbeitung mit Hilfe von Instruktionslisten bewerkstelligt, wobei die Instruktionslisten Sätze von Instruktionen beinhalten, die von der Verarbeitungseinheit 12 der Datenbusteilnehmer 7a, 7b, ..., 7n ausgeführt werden können. Die Instruktionslisten selbst können den einzelnen Datenbusteilnehmern 7a, 7b, ..., 7n in einer Initialisierungsphase vom Lokalbusmaster 3 zugesandt werden oder vorteilhaft während der laufenden Kommunikation den Datenbusteilnehmern 7a, 7b, ..., 7n zugesandt werden, so dass eine Programmierung der Datenbusteilnehmer 7a, 7b, ..., 7n ohne Unterbrechung der Kommunikation stattfindet.

Welche der Instruktionslisten die Datenbusteilnehmer 7a, 7b, ..., 7n verwenden sollen kann den Datenbusteilnehmern 7a, 7b, ..., 7n anhand von einem Instruktionslistenindex mitgeteilt werden. Dieser Instruktionslistenindex informiert den Datenbusteilnehmer darüber, welche gespeicherte Instruktionsliste verwendet werden soll. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle (*engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar. Der Instruktionslistenindex kann vor den zu verarbeitenden Lokalbusdaten in das Datenpaket eingefügt werden, so dass die Datenbusteilnehmer 7a, 7b, ..., 7n entsprechend der Reihenfolge der Lokalbusdaten im Datenpaket die entsprechende Instruktionsliste verwenden können. Die Instruktionslisten weisen dabei Instruktionen auf, die an die Reihenfolge der Lokalbusdaten im Datenpaket angepasst sind. Die Instruktionslisten können dabei beispielsweise für Lokalbusdaten, die nicht an den Datenbusteilnehmer 7a, 7b, ..., 7n gerichtet sind eine "SKIP" Instruktion aufweisen, also den Datenbusteilnehmer 7a, 7b, ..., 7n anweisen den entsprechenden Teil des Datenpakets zu überspringen, wohingegen die Instruktionsliste für Lokalbusdaten, die an den Datenbusteilnehmer 7a, 7b, ..., 7n gerichtet sind entsprechende Instruktionen zum Verarbeiten der Lokalbusdaten aufweisen kann. Die Verarbeitung der Lokalbusdaten kann damit entkoppelt werden von der tatsächlichen Position der Lokalbusdaten im Datenpaket, da die Datenbusteilnehmer mit Hilfe der Instruktionslisten angepasst werden an die Reihenfolge der Lokalbusdaten im Datenpaket. Die Verarbeitung von Lokalbusdaten durch die Verarbeitungseinheit 12 ist in Figur 3 näher gezeigt.

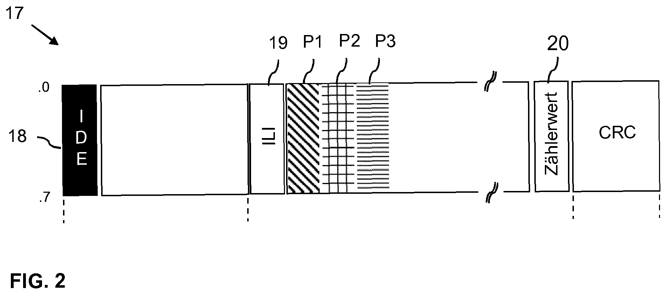

Zunächst wird aber in Figur 2 schematisch ein von einem Lokalbusmaster 3 verwendetes Datenpaket 17 mit Lokalbusdaten P1, P2, P3 gezeigt. Die Lokalbusdaten P1, P2, P3 sind beispielswiese Prozessdaten. Das gezeigte Datenpaket 17 besteht aus einem allgemeinen Kopfteil, einem Informationsteil sowie einem Prüfsummenteil.

Der Kopfteil beinhaltet ein Feld 18, welches ein eindeutiges nur einmal auftretendes Bitmuster IDE enthält, welches auch als Codewort oder Paketkennung bezeichnet werden kann. Die Anzahl und die Ausgestaltung von eindeutigen Bitmustern beziehungsweise Codewörtern hängen ab von der auf dem Ringbus 6 verwendeten Kodierung. Alternativ oder zusätzlich können aber auch spezielle Bitmuster oder Codewörter in dem verwendeten Busprotokoll definiert werden. Es ist dabei nur von Bedeutung, dass die Datenbusteilnehmer 7a, 7b, ..., 7n eineindeutig aus dem Bitmuster beziehungsweise Codewort des Feldes 18 erkennen können, um welche Art von Datenpaket 17 es sich handelt. Das Codewort des Feldes 18 wird beispielsweise über eine Bypassverbindung unmittelbar weitergeleitet. In dem hier gezeigten Ausführungsbeispiel haben die Datenbusteilnehmer 7a, 7b , ..., 7n Kenntnis darüber, dass wenn ein Feld 18 mit einem Bitmuster IDE empfangen wird, das es sich um ein Datenpaket 17 handelt, das Prozessdaten P1, P2, P3 trägt.

Der Kopfteil kann auch noch weitere Informationen beinhalten, die beispielsweise anzeigen, ob sich das Datenpaket 17 in Abwärtsrichtung oder Aufwärtsrichtung bewegt. Hierzu kann beispielsweise der letzte Datenbusteilnehmer 7n in den Kopfteil eine Information schreiben, dass das Datenpaket 17 bereits diesen Datenbusteilnehmer 7n passiert hat und zurückgesendet wurde in Richtung Lokalbusmaster 3. Des Weiteren kann der Kopfteil auch noch eine Information über die Länge des Datenpakets 17 enthalten, so dass die Datenbusteilnehmer 7a, 7b, ..., 7n die Integrität des Datenpakets 17 überprüfen können beziehungsweise Kenntnis darüber haben, wie viele Teile des Datenpakets 17 noch vom Datenbusteilnehmer 7a, 7b, ..., 7n empfangen werden, bevor ein neues Datenpaket 17 startet. Dem Fachmann sind aber auch noch andere Felder bekannt, die in einen Kopfteil eines Datenpakets 17 geschrieben werden können, die zur Steuerung oder Fehlererkennung durch die Datenbusteilnehmer 7a, 7b, ..., 7n genutzt werden können.

Der Informationsteil des Datenpakets 17 kann als erstes einen Instruktionslistenindexfeld 19, ILI, aufweisen welches angibt, welche Instruktionsliste die Datenbusteilnehmer 7a, 7b, ..., 7n verwenden sollen. Beispielsweise kann im Normalbetrieb des Ringbusses 6 vorgesehen sein, dass alle Datenbusteilnehmer 7a, 7b, ..., 7n ihre erste Instruktionsliste verwenden, wohingegen im Fehlerfall die zweite Instruktionsliste verwendet werden soll. Dabei kann der Instruktionslistenindex auf den Speicherplatz der im Datenbusteilnehmer 7a, 7b, ..., 7n gespeicherten Instruktionsliste direkt hinweisen, oder der Instruktionslistenindex kann einen Wert aufweisen, mit dem der Datenbusteilnehmer 7a, 7b, ..., 7n beispielsweise über eine Umsetzungstabelle die entsprechende Instruktionsliste auffinden kann. Der Informationsteil weist des Weiteren die eigentlichen Prozessdaten P1, P2 und P3 auf. Diese Prozessdaten P1, P2, P3 sind in dem hier gezeigten Ausführungsbeispiel mit unterschiedlichen Mustern gezeigt.

In dem hier gezeigten Ausführungsbeispiel ist das Datenpaket 17 in Symbole von jeweils 8 Bit eingeteilt. Das Datenpaket 17 wird auch in dieser Stückelung von den Datenbusteilnehmer 7a, 7b, ..., 7n empfangen und verarbeitet. D.h. als erstes sendet der Lokalbusmaster 3 das Symbol beziehungsweise Feld IDE 18 an den ersten Datenbusteilnehmer 7a, nach einer vorher bestimmten Zeit, sendet der Lokalbusmaster 3 ein weiteres Symbol des Kopfteiles des Datenpakets 17 an den Datenbusteilnehmer 7a, dieser wiederum sendet gleichzeitig das Symbol beziehungsweise Feld IDE 18 an den Datenbusteilnehmer 7b. Diese vorher bestimmte Zeit zwischen Senden und Empfangen der Symbole des Datenpakets, kann auch als Taktung des Lokalbusses bezeichnet werden, d.h. als Bustakt. Das Senden und Empfangen kann dabei zu jedem Takt geschehen oder kann mehrere Takte in Anspruch nehmen.

Des Weiteren weist das Datenpaket 17 im Informationsteil noch ein Feld 20 auf, welches als Zähler ausgestaltet sein kann, und welches von jedem Datenbusteilnehmer 7a, 7b, ..., 7n durch welchen dieser Teil des Datenpakets 17 bereits geleitet wurde inkrementiert oder dekrementiert werden kann. Der Zählerwert des Feldes 20 kann von dem Lokalbusmaster 3 verwendet werden, um zu überprüfen, ob das Datenpaket 17 alle Datenbusteilnehmer 7a, 7b, ..., 7n durchlaufen hat.

Das in Figur 2 gezeigte Datenpaket 17 weist ein eineindeutigen Bitmuster 18 und endet mit einer Prüfsumme. Dem Fachmann ist aber bewusst, dass ein Zyklusrahmen mehrere Datenpakete enthalten kann, die organisatorisch innerhalb eines Zyklusrahmen beinhaltet sind. Datenpakete selbst können durch eineindeutige vorangestellte Bitmuster gekennzeichnet werden.

In dem hier gezeigten Ausführungsbeispiel sind die Datenbusteilnehmer 7a, 7b, ..., 7n eingerichtet auszuwerten, dass wenn ein Datenpaket mit dem Bitmuster IDE 18 empfangen wird, dieses Datenpaket Prozessdaten P1, P2, P3, ..., PN trägt. Die Verarbeitung von Lokalbusdaten am Beispiel von den Prozessdaten P1, P2, P3 ist in Figur 3 näher gezeigt.

Figur 3 zeigt eine schematische Darstellung einer beispielhaften Ausführungsform eines Datenbusteilnehmers 7a des in Figur 1 gezeigten Ringbusses 6 zur Verarbeitung eines in Figur 2 gezeigten Datenpakets 17 mit den Prozessdaten P1, P2, P3 als Lokalbusdaten.

Der Datenbusteilnehmer 7a weist in dem hier gezeigten Ausführungsbeispiel eine Eingangsschnittstelle 8 auf, die in Abwärtsrichtung symbolweise das Datenpaket 17 - wie in Figur 2 dargestellt - empfängt, dieses Datenpaket kann auch als Lokalbusdatenpaket oder Lokalbusdaten bezeichnet werden. Im Fall von Datenbusteilnehmer 7a, empfängt dieser über die Eingangsschnittstelle 8 die Lokalbusdaten von dem vorgelagerten Lokalbusmaster 3. In dem hier beschriebenen Ausführungsbeispiel werden die Lokalbusdaten an der Eingangsschnittstelle 8 seriell empfangen. Das bedeutet, dass die Lokalbusdaten nacheinander insbesondere bitweise empfangen werden. In dem in Figur 3 gezeigten Ausführungsbeispiel können in der Eingangsschnittstelle 8 noch weitere Komponenten angeordnet sein. Zum Beispiel kann an oder in der Eingangsschnittstelle 8 integriert auch ein Dekodierer angeordnet sein - hier nicht gezeigt -, der in der Lage ist ein kodiertes Eingangssignal zu dekodieren. Weiterhin wird in Figur 3 gezeigt, dass in der Eingangsschnittstelle 8 zumindest ein Seriell-Parallel-Wandler integriert ist, der den seriell empfangenen Teil des Datenpakets 17 in einen parallelen Datenstrom 24 überführt. Beispielsweise kann der Seriell-Parallel-Wandler die Symbole des Datenpakets 17 in einen 8-Bit parallelen Datenstrom 24 umwandeln. Dieser parallele Datenstrom 24 wird dann der Verarbeitungseinheit 12 zugeführt und kann dementsprechend auch als paralleler Eingangsdatenstrom 24 bezeichnet werden.

Des Weiteren kann die Eingangsschnittstelle 8 ein Gültigkeitssignal 23 ausgeben, welches anzeigt, dass die Daten fehlerfrei empfangen wurden. Auch das Gültigkeitssignal 23 wird der Verarbeitungseinheit 12 und insbesondere auch der Verarbeitungskomponente 21a zugeführt.

Die Verarbeitungseinheit 12 weist in dem hier gezeigten Ausführungsbeispiel eine Verarbeitungskomponente 21a und eine Logikeinheit 21b auf. Der von dem Seriell-Parallel-Wandler erzeugte parallele Datenstrom 24 wird der Verarbeitungskomponente 21a sowie der Logikeinheit 21b zugeleitet. Die Verarbeitungskomponente 21a ist eingerichtet, die vor den Prozessdaten P1, P2, P3 empfangenen ILI 19 auszuwerten, und zu steuern welche Instruktionsliste und damit welche Instruktionen abgearbeitet werden müssen für die folgenden Prozessdaten P1, P2, P3. Mit Hilfe dieser Instruktionen und dem zugeleiteten parallelen Datenstrom 25 ist die Verarbeitungskomponente 21a eingerichtet, ein Steuersignal 26 zu erzeugen. Dieses Steuersignal 26 steuert die Logikeinheit 21b den anliegenden parallelen Datenstrom 24 zu ändern beziehungsweise zu manipulieren. Die Logikeinheit 21b, die auch als Manipulationseinheit bezeichnet werden kann, ist eingerichtet, basierend auf dem Steuersignal 26 einen geänderten parallelen Datenstrom 27 zu erzeugen. Dieser geänderte parallele Datenstrom 27 wird der Ausgangsschnittstelle 9 zugeführt und kann dementsprechend auch als paralleler Ausgangsdatenstrom 27 bezeichnet werden. Der parallele Datenstrom 24 entspricht dabei den ersten Lokalbusdaten an der Eingangsschnittstelle 8 zu jeder gegebenen Zeit, beispielsweise entspricht dieser parallele Datenstrom 24 zur Zeit τ = 1 den 8-Bit der ersten Prozessdaten P1. Der parallele Datenstrom 24 stellt somit zur Zeit τ = 1 die 8-Bit der ersten Lokalbusdaten P1 dar. Nahezu ohne Verzögerung wird von der Logikeinheit auch zur Zeit τ = 1 der parallele Datenstrom 27 bereitgestellt also die zweiten Lokalbusdaten P1' an der Ausgangsschnittstelle 9. Da zu dieser Zeit noch keine Änderung der ersten Lokalbusdaten P1 stattgefunden hat, entsprechen sich die parallelen Datenströme 24 und 27 zu dieser Zeit noch. Nachdem die Logikeinheit 21b allerdings das Steuersignal 26 der Verarbeitungskomponente 21a empfangen hat, werden die ersten Lokalbusdaten P1 geändert in die zweiten Lokalbusdaten P1', so dass zur Zeit τ = 1' die ersten Lokalbusdaten P1 nicht mehr den zweiten Lokalbusdaten P1' entsprechen, zumindest unter der Voraussetzung, dass das Steuersignal 26 eine Änderung der ersten Lokalbusdaten P1 steuert. Gleiches gilt für τ = 2/2' mit den Prozessdaten P2 und τ = 3/3' mit den Prozessdaten P3. Das heißt, auch wenn im Folgenden von den ersten Lokalbusdaten immer in Gesamtheit als P1, P2, P3 die Rede ist oder von den zweiten Lokalbusdaten in Gesamtheit als P1', P2', P3', so ist dem Fachmann bewusst, dass die einzelnen Prozessdaten P1, P1', P2, P2', P3, P3' jeweils immer mit einer bestimmten Zeit τ= 1/1', τ = 2/2', τ = 3/3' usw. einhergehen, weil zu jeder gegebene Zeit ein Datenbusteilnehmer 7a, 7b, ..., 7n nur immer einen Teil des Datenpakets 17 vorliegen hat und bearbeiten kann. Die folgende Beschreibung muss also zusätzlich immer mit der zeitlichen Komponente betrachtet werden.

Da die Logikeinheit 21b aus Logikelementen besteht - hier nicht gezeigt - gibt es nahezu keine Verzögerung für den Signalfluss zwischen Eingang und Ausgang der Logikeinheit 21b. D.h. wenn am Eingang der Logikeinheit 21b die ersten Lokalbusdaten P1, P2, P3 anliegen, werden diese nahezu ohne Verzögerung am Ausgang der Logikeinheit 21b als zweite Lokalbusdaten P1', P2', P3' ausgegeben. In diesem Fall entsprechen die ersten Lokalbusdaten P1, P2, P3 (noch) den zweiten Lokalbusdaten P1', P2', P3', weil die Logikeinheit 21b eben noch keine Änderungen der ersten Lokalbusdaten P1, P2, P3 vorgenommen hat. Erst durch ein von der Verarbeitungskomponente 21a erzeugtes Steuersignal 26, welches der Logikeinheit 21b zugeleitet wird, wird eine Änderung der ersten Lokalbusdaten P1, P2, P3 vorgenommen. Die Verarbeitungskomponente 21a ist dabei eingerichtet eine vorbestimmte Verarbeitung mit den Prozessdaten P1, P2, P3 vorzunehmen anhand von Instruktionen in ihrer Instruktionsliste, wobei die entsprechende Liste mit Hilfe der ILI 19 im Datenpaket 17 ausgewählt wurde. Zum Erzeugen des Steuersignals 26 und Abarbeitung der Instruktionen in der Instruktionsliste benötigt die Verarbeitungskomponente 21a allerdings Zeit. Die Logikeinheit 21b kann aber nahezu ohne Verzögerung den parallelen Datenstrom 24 als parallelen Datenstrom 27 an der Ausgangsschnittstelle 9 bereitstellen. Damit die Ausgangsschnittstelle 9 aber nicht vorzeitig den parallelen Datenstrom 27 durch den an der Ausgangschnittstelle 9 angeordneten Parallel-Seriell-Wandler in ein serielles Signal wandelt und dieses an den nachgelagerten Datenbusteilnehmer 7b sendet, ist die Ausgangsschnittstelle 9 dazu eingerichtet, erst zu senden, wenn die Ausgangsschnittstelle 9 ein Gültigkeitssignal 23 der Logikeinheit 21b erhält.

Die Ausgangsschnittstelle 9 kann auch einen Kodierer aufweisen, um den seriellen Datenstrom gemäß der Systemanforderungen entsprechend zu kodieren. Das am Eingang der Ausgangsschnittstelle 9 anliegende Gültigkeitssignal 23' basiert auf dem Gültigkeitssignal 23, welches von der Eingangsschnittstelle 8 an die Logikeinheit 21b ausgegeben ist. Damit die Verarbeitungskomponente 21a genügend Zeit hat, um das Steuersignal 26 zu erzeugen und die Logikeinheit 21b mit dem Steuersignal die ersten Lokalbusdaten P1, P2, P3 in die zweiten Lokalbusdaten P1', P2', P3' ändern kann, verzögert die Logikeinheit 21b das Gültigkeitssignal 23 der Eingangsschnittstelle 8. Hierzu weist die Logikeinheit 21b eine Anzahl von Verzögerungsgliedern 22a, 22b auf, die das Gültigkeitssignal 23 eine gewisse konstante Zeit verzögern, bis es als verzögertes Gültigkeitssignal 23' an der Ausgangsschnittstelle 9 anliegt. Die Länge der Verzögerung hängt ab von der Anzahl der Verzögerungsglieder 22a, 22b. In dem hier gezeigten Ausführungsbeispiel entsprechen die zwei Verzögerungsglieder 22a, 22b einer Verzögerung von zwei Arbeitstakten der Verarbeitungskomponente 21a. Die Verarbeitungskomponente 21a hat also zwei Arbeitstakte Zeit, dass Steuersignal zu erzeugen und die Logikeinheit 21a entsprechend zu steuern die Prozessdaten P1, P2, P3 zu ändern, bevor das verzögerte Gültigkeitssignal 23' an die Ausgangsschnittstelle 9 weitergeleitet wird und die zweiten Lokalbusdaten P1', P2', P3' an den nächsten Datenbusteilnehmer 7b gesendet werden. Auch wenn hier nur zwei Verzögerungsglieder 22a, 22b gezeigt sind, so ist dem Fachmann bewusst, dass eine beliebige Anzahl von Verzögerungsgliedern 22a, 22b verwendet werden können. Um ein deterministisches Verhalten des Ringbusses 6 zu gewährleisten, ist es dabei nur von Bedeutung, dass die Datenbusteilnehmer 7a, 7b, ..., 7n jeweils eine konstante Verzögerung, also eine konstante Anzahl von Verzögerungsgliedern 22a, 22b aufweisen. Dabei ist es beispielsweise bevorzugt, wenn alle Datenbusteilnehmer 7a, 7b, ..., 7n die gleiche Anzahl von Verzögerungsgliedern 22a, 22b aufweisen.

In dem hier gezeigten Ausführungsbeispiel wird nur eine Verarbeitung der Lokalbusdaten P1, P2, P3 in Abwärtsrichtung durchgeführt, also jeweils zwischen den Schnittstellen 8 und 9. In Aufwärtsrichtung also zwischen den Schnittstellen 10 und 11 findet keine erneute Verarbeitung statt. Dies ist damit angedeutet, dass die Schnittstellen 10 und 11 direkt miteinander verbunden sind. Dem Fachmann ist aber bewusst, dass auch in Aufwärtsrichtung eine der Abwärtsrichtung entsprechende Verarbeitung der Lokalbusdaten P1, P2, P3 beziehungsweise der dann bereits verarbeiteten Lokalbusdaten P1', P2', P3' stattfinden kann. Hierzu kann der Datenbusteilnehmer 7a eine weitere der Verarbeitungseinheit 12 entsprechende Einheit aufweisen, oder es kann die Verarbeitungseinheit 12 selbst genutzt werden.

In dem hier gezeigten Ausführungsbeispiel ist auch gezeigt, dass durch den Datenbusteilnehmer 7a alle Lokalbusdaten P1, P2 und P3 verarbeitet werden, was durch deren geändertes Muster dargestellt ist. Es ist dem Fachmann aber durchaus bewusst, dass die Verarbeitungskomponente 21a auch Instruktionen beinhalten kann, die die Logikeinheit 21b anweisen kann, keine Änderung durchzuführen. In diesem Fall entsprechen die ersten Lokalbusdaten P1, P2, P3 den zweiten Lokalbusdaten P1', P2' und P3'. Dennoch wird das Gültigkeitssignal 23 durch die Verzögerungsglieder 22a, 22b für eine bestimmte Zeit verzögert, bevor es an die Ausgangsschnittstelle 9 geleitet wird. Danach sendet die Ausgangsschnittstelle 9 die nicht verarbeiteten Lokalbusdaten P1, P2, P3 an den nachgelagerten Datenbusteilnehmer 7b.

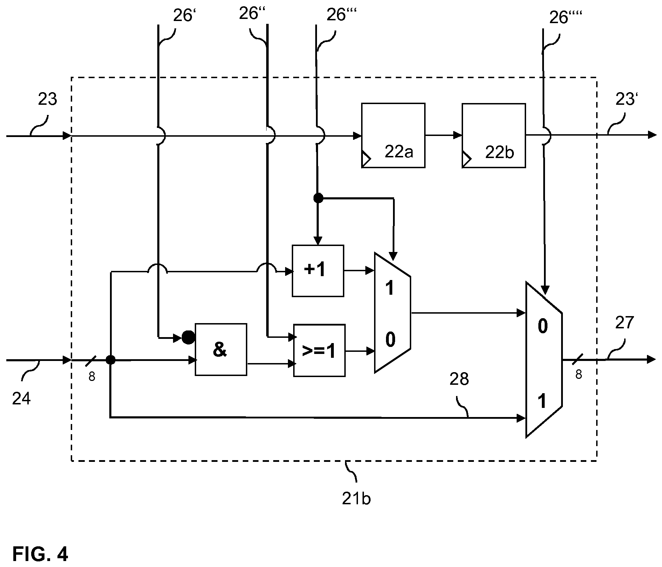

Eine detaillierte Ansicht der Logikeinheit 21b zur Änderung der Lokalbusdaten P1, P2, P3 ist in Figur 4 dargestellt. Figur 4 zeigt exemplarisch verschiedene Logikelemente der Logikeinheit 21b durch welche der parallele Eingangsdatenstrom 24 geleitet wird um einen parallelen Ausgangsdatenstrom 27 zu erzeugen. Im Ausführungsbeispiel der Figur 4 weist der Eingangsdatenstrom 24 und der Ausgangsdatenstrom 27 eine Breite von 8 Bit auf. Dabei sind die verschiedenen Logikelemente der Logikeinheit 21b angepasst, ein Steuersignal 26 der Verarbeitungskomponente 21a zu empfangen und ihrer Logikfunktion entsprechend Änderungen an dem parallelen Eingangsdatenstrom 24 durchzuführen. In dem hier gezeigten Ausführungsbeispiel weist das Steuersignal 26 vier individuelle Steuersignalkomponenten 26', 26", 26‴, 26ʺʺ auf, die von der Verarbeitungskomponente 21a erzeugt werden, um die hier nur exemplarisch gezeigten vier Logikelemente der Logikeinheit 21b zu steuern. Durch das Steuersignal 26"" wird ein Multiplexer gesteuert, der bei einer logischen Eins die ersten Lokalbusdaten 24 über die Bypassleitung 28 als zweite Lokalbusdaten 27 ausgibt. Hingegen werden bei einer logischen Null die zweiten Lokalbusdaten durch die vorgelagerte Logik gebildet. Durch das Steuersignal 26‴ wird ein weiterer Multiplexer und ein Addierer zur Inkrementierung der ersten Lokalbusdaten 24 gesteuert. Ist das Steuersignal 26‴ logisch Null werden die Ausgangwerte von ODER-Gattern als zweite Lokalbusdaten ausgegeben. Das Steuersignal 26" wird auf Eingänge der ODER-Gatter eingegeben. Das Steuersignal 26' wird invertiert auf Eingänge der UND-Gatter eingegeben. Durch die ODER-Gatter und die UND-Gatter werden die Funktionen Löschen und Setzen realisiert. In der Darstellung der Figur 4 sind 8 ODER-Gatter und 8 UND-Gatter vorgesehen, wobei zum vereinfachten Verständnis nur ein ODER-Gatter und ein UND-Gatter gezeigt sind. Dem Fachmann ist aber bewusst, dass auch andere als die hier gezeigten Logikelemente vorhanden sein können und diese auch nur mit einem oder mehreren Steuersignalen gesteuert werden können.

Wenn der Eingangsdatenstrom 24 keine Prozessdaten P1, P2, P3 enthält, sondern beispielsweise Steuerdaten die nur für die Verarbeitungskomponente 21a gedacht sind, aber keiner Änderung bedürfen, so weist die Logikeinheit 21b auch eine Bypassleitung 28 auf, mit der die Lokalbusdaten an den Logikelementen vorbei geleitet werden können. Beispielsweise wird eine Paketkennung (z.B. IDE) als Steuerdaten über die Bypassleitung durchgeschleift.

Des Weiteren weist die Logikeinheit 21b in dem hier gezeigten Ausführungsbeispiel zwei Verzögerungsglieder 22a und 22b auf, die das Gültigkeitssignal 23 um eine bestimmte Zeit verzögern, bis dieses verzögerte Gültigkeitssignal 23' an die Ausgangsschnittstelle 9 weitergeleitet wird. Die Verzögerungsglieder 22a und 22b können beispielsweise zustandsgesteuerte FlipFlops sein und ein Bit für die Dauer von einem Takt speichern können. Wie bereits oben beschrieben entspricht der eine Takt, vorzugsweise einem Arbeitstakt von der Verarbeitungskomponente 21a, der ein Vielfaches des Taktes des Ringbusses 6 sein kann oder diesem sogar entsprechen kann. Erst wenn das verzögerte Gültigkeitssignal 23' an der Ausgangsschnittstelle 9 empfangen wird, so sendet diese die durch die Logikelemente der Logikeinheit 21b geänderten zweiten Lokalbusdaten P1', P2', P3' an den nächsten Datenbusteilnehmer 7b in dem Ringbus 6.

Die in dem beschriebenen Ausführungsbeispiel als separate Einheiten, Module oder Schnittstellen beschriebenen Bauteile der erfindungsgemäßen Vorrichtung können als separate Hardware implementiert sein, sind jedoch vorzugsweise auf demselben Halbleiterchip integriert. Vorzugsweise ist deren Funktion durch eine Hardware aus Logikgattern implementiert. Zum Beispiel können die Einheiten, Module, oder Schnittstellen auf einem FPGA/ASIC implementiert sein.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 6: Ringbus
- 7a, b, n: Datenbusteilnehmer
- 8: Eingangsschnittstelle
- 9: Ausgangsschnittstelle
- 10: Abwärtsdateneingangsschnittstelle
- 11: Abwärtsdatenausgangsschnittstelle
- 12: Verarbeitungseinheit
- 13, 14: Ein-/Ausgänge
- 15: Sensor
- 16: Aktor
- 17: Datenpaket mit Prozessdaten
- 18: IDE Codewort
- 19: Instruktionslistenindex
- P1, P2, P3: erste Lokalbusdaten, Prozessdaten
- P1', P2', P3': zweiten Lokalbusdaten, verarbeitete Prozessdaten
- 20: Zählerwert
- 21a: Verarbeitungskomponente
- 21b: Logikelemente
- 22a, 22b: Verzögerungsglied
- 23, 23': Gültigkeitssignal
- 24: paralleler Eingangsdatenstrom, erste Lokalbusdaten
- 25: zu verarbeitende Daten
- 26, 26', 26", 26‴, 26"": Steuersignal
- 27: paralleler Ausgangsdatenstrom, zweite Lokalbusdaten
- 28: Bypassleitung

## Patentansprüche

1. Eine Logikeinheit (21b), die angepasst ist zum Ändern einer Menge von durch eine Eingangsschnittstelle (8) empfangenen ersten Lokalbusdaten (P1, P2, P3) basierend auf einem Steuersignal (26) zur Erzeugung von zu sendenden zweiten Lokalbusdaten (P1', P2', P3');
wobei die Logikeinheit (21b) nicht-taktgesteuerte Logikelemente aufweist, die durch das Steuersignal (26) zur Änderung der ersten Lokalbusdaten (P1, P2, P3) gesteuert sind; und
wobei die Logikeinheit (21b) weiter angepasst ist zum taktgesteuerten Verzögern des Sendens der zweiten Lokalbusdaten (P1', P2', P3') durch eine Ausgangsschnittstelle (9).

2. Die Logikeinheit (21b) nach Anspruch 1, wobei durch die Logikeinheit (21b) ein paralleler Eingangsdatenstrom (24) geleitet wird, um einen parallelen Ausgangsdatenstrom (27) zu erzeugen.

3. Die Logikeinheit (21b) nach einem der vorhergehenden Ansprüche, weiter aufweisend: mindestens ein Verzögerungsglied (22a, 22b) mit einem Takteingang zur zeitlichen taktgesteuerten Verzögerung des Sendens der zweiten Lokalbusdaten (P1', P2', P3').

4. Die Logikeinheit (21b) nach Anspruch 3, wobei das mindestens eine Verzögerungsglied (22a, 22b) ein zustandsgesteuertes Flip-Flop ist.

5. Die Logikeinheit (21b) nach einem der vorhergehenden Ansprüche, wobei die Logikeinheit (21b) angepasst ist zum:
Setzen einer Anzahl von Bits in den ersten Lokalbusdaten (P1, P2, P3), oder Löschen einer Anzahl von Bits aus den ersten Lokalbusdaten (P1, P2, P3), oder
Inkrementieren einer Anzahl von Bits in den ersten Lokalbusdaten (P1, P2, P3), oder
Zwischenspeichern eines Überlaufbits aus den ersten Lokalbusdaten (P1, P2, P3), oder
einer Kombination daraus zur Erzeugung der zweiten Lokalbusdaten (P1', P2', P3').

6. Die Logikeinheit (21b) nach einem der vorhergehenden Ansprüche, wobei die Logikeinheit (21b) angepasst ist, zur Ausgabe eines Gültigkeitssignals (23') an die Ausgangsschnittstelle (9), wobei das Gültigkeitssignal (23') durch die Logikeinheit (21b) taktgesteuert verzögert ist.

7. Die Logikeinheit (21b) nach einem der vorhergehenden Ansprüche, weiter aufweisend:
eine insbesondere steuerbare Bypassverbindung (28) zwischen Eingangsschnittstelle (8) und Ausgangsschnittstelle (9) zum Weiterleiten von Lokalbusdaten.

8. Die Logikeinheit (21b) nach Anspruch 7, wobei die Lokalbusdaten, die von der Bypassverbindung (28) weitergeleitet werden, von der Logikeinheit (21b) nicht verändert werden.

9. Die Logikeinheit (21b) nach Anspruch 8, wobei die Lokalbusdaten, die von der Bypassverbindung (28) weitergeleitet werden, keine Prozessdaten enthalten, oder wobei eine Paketkennung als Steuerdaten über die Bypassverbindung (28) durchgeschleift wird.

10. Die Logikeinheit (21b) nach einem der vorhergehenden Ansprüche, weiter aufweisend:
einen Multiplexer, der durch eine vierte Steuersignalkomponente (26"") des Steuersignals (26) gesteuert wird und bei einer logischen Eins die ersten Lokalbusdaten (P1, P2, P3) über eine Bypassleitung (28) als zweite Lokalbusdaten (P1', P2', P3') ausgibt und bei einer logischen Null die zweiten Lokalbusdaten (P1', P2', P3') durch eine dem Multiplexer vorgelagerte Logik gebildet werden.

11. Die Logikeinheit (21b) nach einem der vorhergehenden Ansprüche, weiter aufweisend:
einen Addierer zur Inkrementierung der ersten Lokalbusdaten (P1, P2, P3) und einen Multiplexer, die beide durch eine dritte Steuersignalkomponente (26‴) des Steuersignals (26) gesteuert werden.

12. Ein Verfahren zur Verarbeitung von Daten in einer Logikeinheit (21b), das Verfahren aufweisend:
Empfangen von ersten Lokalbusdaten (P1, P2, P3) an einer Eingangsschnittstelle (8);
Ändern einer Menge der empfangenen ersten Lokalbusdaten (P1, P2, P3) basierend auf einem Steuersignal (26) zur Erzeugung von zu sendenden zweiten Lokalbusdaten (P1', P2', P3'); und
taktgesteuertes Verzögern des Sendens der zweiten Lokalbusdaten (P1', P2', P3') durch eine Ausgangsschnittstelle (9).

## Claims

1. A logic unit (21b) adapted to change a quantity of first local bus data (P1, P2, P3) received by an input interface (8) based on a control signal (26) for generating second local bus data (P1', P2', P3') to be transmitted;
wherein the logic unit (21b) comprises non-clock-controlled logic elements controlled by the control signal (26) for changing the first local bus data (P1, P2, P3); and
wherein the logic unit (21b) is further adapted to clock-controlled delay the transmission of the second local bus data (P1', P2', P3') by an output interface (9).

2. The logic unit (21b) according to claim 1, wherein a parallel input data stream (24) is passed through the logic unit (21b) to generate a parallel output data stream (27).

3. The logic unit (21b) according to any one of the preceding claims, further comprising: at least one delay element (22a, 22b) having a clock input for temporal clock-controlled delaying the transmission of the second local bus data (P1', P2', P3').

4. The logic unit (21b) according to claim 3, wherein the at least one delay element (22a, 22b) is a state-controlled flip-flop.

5. The logic unit (21b) according to any one of the preceding claims, wherein the logic unit (21b) is adapted to:
set a number of bits in the first local bus data (P1, P2, P3), or
delete a number of bits from the first local bus data (P1, P2, P3), or
increment a number of bits in the first local bus data (P1, P2, P3), or
buffer an overflow bit from the first local bus data (P1, P2, P3), or
a combination thereof for generating the second local bus data (P1', P2', P3').

6. The logic unit (21b) according to any one of the preceding claims, wherein the logic unit (21b) is adapted to output a validity signal (23') to the output interface (9), wherein the validity signal (23') is clock-controlled delayed by the logic unit (21b).

7. The logic unit (21b) according to any one of the preceding claims, further comprising:
an in particular controllable bypass connection (28) between input interface (8) and output interface (9) for forwarding local bus data.

8. The logic unit (21b) according to claim 7, wherein the local bus data forwarded by the bypass connection (28) is not changed by the logic unit (21b).

9. The logic unit (21b) according to claim 8, wherein the local bus data forwarded by the bypass connection (28) does not contain any process data, or wherein a packet identifier is looped through as control data via the bypass connection (28).

10. The logic unit (21b) according to any one of the preceding claims, further comprising:
a multiplexer controlled by a fourth control signal component (26ʺʺ) of the control signal (26) and outputting at a logic one the first local bus data (P1, P2, P3) via a bypass line (28) as second local bus data (P1', P2', P3') and at a logic zero the second local bus data (P1', P2', P3') is formed by a logic upstream of the multiplexer.

11. The logic unit (21b) according to any one of the preceding claims, further comprising:
an adder for incrementing the first local bus data (P1, P2, P3) and a multiplexer both controlled by a third control signal component (26‴) of the control signal (26).

12. A method for processing data in a logic unit (21b), the method comprising:
receiving first local bus data (P1, P2, P3) at an input interface (8);
changing a quantity of the received first local bus data (P1, P2, P3) based on a control signal (26) for generating second local bus data (P1', P2', P3') to be transmitted; and
clock-controlled delaying the transmission of the second local bus data (P1', P2', P3') by an output interface (9).

## Revendications

1. Une unité logique (21b), qui est adaptée pour modifier une quantité de premières données de bus local (P1, P2, P3) reçues par une interface d'entrée (8) sur la base d'un signal de commande (26) pour générer des deuxièmes données de bus local (P1', P2', P3') à envoyer ;
dans laquelle l'unité logique (21b) comporte des éléments logiques à cadence non commandée, qui sont commandés par le signal de commande (26) pour modifier les premières données de bus local (P1, P2, P3) ; et
dans laquelle l'unité logique (21b) est adaptée par ailleurs pour retarder avec une cadence commandée l'envoi des deuxièmes données de bus local (P1', P2', P3') par une interface de sortie (9).

2. L'unité logique (21b) selon la revendication 1, dans laquelle un flux de données d'entrée parallèle (24) est acheminé à travers l'unité logique (21b) pour générer un flux de données de sortie parallèle (27).

3. L'unité logique (21b) selon l'une des revendications précédentes, comportant par ailleurs : au moins un organe retardateur (22a, 22b) avec une entrée de cadence pour retarder dans le temps avec une cadence commandée l'envoi des deuxièmes données de bus local (P1', P2', P3').

4. L'unité logique (21b) selon la revendication 3, dans laquelle l'au moins un organe retardateur (22a, 22b) est un flip-flop à état commandé.

5. L'unité logique (21b) selon l'une des revendications précédentes, dans laquelle l'unité logique (21b) est adaptée pour :
définir un nombre de bits dans les premières données de bus local (P1, P2, P3), ou supprimer un nombre de bits des premières données de bus local (P1, P2, P3), ou
incrémenter un nombre de bits dans les premières données de bus local (P1, P2, P3), ou
stocker temporairement un bit de débordement provenant des premières données de bus local (P1, P2, P3), ou
les combiner pour générer les deuxièmes données de bus local (P1', P2', P3').

6. L'unité logique (21b) selon l'une des revendications précédentes, dans laquelle l'unité logique (21b) est adaptée pour émettre un signal de validité (23') à l'interface de sortie (9), dans laquelle le signal de validité (23') est retardé avec une cadence commandée par l'unité logique (21b).

7. L'unité logique (21b) selon l'une des revendications précédentes, comportant par ailleurs :
une liaison de dérivation (28) pouvant en particulier être commandée entre l'interface d'entrée (8) et l'interface de sortie (9) pour transférer des données de bus local.

8. L'unité logique (21b) selon la revendication 7, dans laquelle les données de bus local, qui sont transférées par la liaison de dérivation (28), ne sont pas modifiées par l'unité logique (21b).

9. L'unité logique (21b) selon la revendication 8, dans laquelle les données de bus local, qui sont transférées par la liaison de dérivation (28), ne contiennent pas de données de processus, ou dans laquelle un identifiant de paquet est bouclé en tant que données de commande par l'intermédiaire de la liaison de dérivation (28).

10. L'unité logique (21b) selon l'une des revendications précédentes, comportant par ailleurs :
un multiplexeur, qui est commandé par une quatrième composante de signal de commande (26ʺʺ) du signal de commande (26) et émet, dans le cas d'un un logique, les premières données de bus local (P1, P2, P3) par l'intermédiaire d'une ligne de dérivation (28) en tant que deuxièmes données de bus local (P1', P2', P3') et, dans le cas d'un zéro logique, les deuxièmes données de bus local (P1', P2', P3') sont formées par une logique placée en amont du multiplexeur.

11. L'unité logique (21b) selon l'une des revendications précédentes, comportant par ailleurs :
un additionneur pour incrémenter les premières données de bus local (P1, P2, P3) et un multiplexeur, qui sont commandés tous deux par une troisième composante de signal de commande (26‴) du signal de commande (26).

12. Un procédé de traitement de données dans une unité logique (21b), le procédé comportant :
la réception de premières données de bus local (P1, P2, P3) sur une interface d'entrée (8) ;
la modification d'une quantité des premières données de bus local (P1, P2, P3) reçues sur la base d'un signal de commande (26) pour générer des deuxièmes données de bus local (P1', P2', P3') à envoyer ; et
le retardement à cadence commandée de l'envoi des deuxièmes données de bus local (P1', P2', P3') par une interface de sortie (9).
